# FASCICULE DE BREVET EUROPEEN

(11) **EP 3 412 524 B1**
(45) Date de publication et mention de la délivrance du brevet: **23.02.2022**
(21) Numéro de dépôt: 18173741.2
(22) Date de dépôt: 23.05.2018
(51) Int. Cl.: B60S 1/04

(54) **PALIER COMPRENANT UN BRAS DE MAINTIEN D'UNE TIMONERIE DANS UNE POSITION DE TRANSPORT, SOUS-ENSEMBLE DE TIMONERIE ET TIMONERIE ASSOCIÉS, ET PROCÉDÉ DE BLOCAGE D'UNE TIMONERIE DANS SA POSITION DE TRANSPORT**
LAGER, DAS EINEN HALTEARM EINES STEUERSTANDS IN EINER TRANSPORTPOSITION UMFASST, ENTSPRECHENDE UNTEREINHEIT DES STEUERSTANDS UND ENTSPRECHENDER STEUERSTAND SOWIE BLOCKIERVERFAHREN EINES STEUERSTANDS IN SEINER TRANSPORTPOSITION
BEARING COMPRISING AN ARM FOR HOLDING A LINKAGE IN A TRANSPORT POSITION, ASSOCIATED LINKAGE SUBASSEMBLY AND LINKAGE, AND METHOD FOR LOCKING A LINKAGE IN THE TRANSPORT POSITION THEREOF

(30) Priorité: 05.06.2017 FR 1754971
(43) Date de publication de la demande: 12.12.2018
(73) Titulaire: Valeo Systèmes d'Essuyage, 78322 Le Mesnil Saint Denis (FR)
(72) Inventeur: RENOUX, Pascal, 63500 ISSOIRE (FR); KUCHLY, Nicolas, 63500 ISSOIRE (FR); VIARD, Robin, 63500 ISSOIRE (FR)
(74) Mandataire: Valeo Visibility

(56) Documents cités:
- DE-A1- 10 313 540
- DE-A1-102014 207 287
- DE-A1-102015 202 307
- DE-A1-102015 216 894
- DE-A1-102015 219 853
- FR-A1- 2 972 163

## Description

La présente invention se rapporte au domaine des timoneries des mécanismes d'essuyage, notamment pour véhicule automobile, et plus particulièrement au blocage de ces timoneries dans une position de transport. Plus spécifiquement, la présente invention se rapporte à un bras de maintien comprenant un élément de blocage d'une timonerie dans une position de transport. La présente invention se rapporte également à un sous-ensemble de timonerie et à une timonerie présentant un tel bras de maintien et également à un procédé de blocage d'une telle une timonerie.

Les timoneries de mécanisme d'essuyage de véhicules automobiles sont des systèmes articulés en différents endroits. Cette articulation est nécessaire pour le bon fonctionnement du système d'essuyage une fois la timonerie installée sur le véhicule automobile. Cependant, une telle articulation présente des problèmes notamment pour le transport de cette timonerie et pour l'installation de celle-ci sur le véhicule automobile. Ainsi, il est nécessaire de limiter les degrés de liberté de la timonerie aussi bien lors de son transport que lors de son installation.

On connaît des éléments de blocage permettant de relier la bielle à des paliers permettant la fixation de la timonerie sur le véhicule automobile de sorte que la timonerie soit dans une position de transport. Les éléments de blocage connus dans l'état de la technique peuvent se présenter sous différentes formes, comme par exemple sous une forme de pince, afin d'assurer le blocage de cette timonerie dans une position de transport et d'installation, c'est-à-dire une position dans laquelle tout mouvement d'un palier de la timonerie par rapport à la bielle est empêché.

Cependant, les éléments de blocage connus sont à usage unique et sont enlevés par découpe par exemple après installation de la timonerie sur le véhicule automobile. Ainsi, il est nécessaire d'utiliser des outils, généralement coupants, afin de pouvoir libérer la timonerie. Par ailleurs, de tels éléments de blocage génèrent des débris qu'il sera nécessaire de traiter ultérieurement, ce qui engendre des coûts supplémentaires.

Le document DE 10 2015 216894 A1 montre un palier d'une timonerie d'un mécanisme d'essuyage selon le préambule de la première revendication.

La présente invention a pour objectif de pallier au moins partiellement les inconvénients de l'art antérieur exposés ci-dessus.

Un autre objectif de la présente invention, différent de l'objectif précédent, est de proposer un élément de blocage d'une timonerie d'un mécanisme d'essuyage notamment pour véhicule pouvant être retiré sans nécessiter d'outils.

Un autre objectif de la présente invention, différent des objectifs précédents, est de proposer un élément de blocage qui peut rester sur la timonerie du mécanisme d'essuyage, une fois celle-ci installée, de manière à réduire la production de déchets à traiter.

Un autre objectif de la présente invention, différent des objectifs précédents est de proposer un élément de blocage qui est simple d'installation sur une timonerie d'un mécanisme d'essuyage.

Encore un objectif de la présente invention, différent des objectifs précédents, est de proposer un élément de blocage qui permet une libération simple de la timonerie du mécanisme d'essuyage.

A cet effet, afin d'atteindre au moins un des objectifs précités au moins partiellement, la présente invention a pour objet un palier d'une timonerie d'un mécanisme d'essuyage, le palier comportant un bras de maintien d'une bielle dans une position de transport, le bras de maintien logeant à son extrémité libre un élément de blocage de la bielle dans une position de transport, ledit élément de blocage étant mobile en translation entre une position déverrouillée et une position de verrouillage dans laquelle la bielle est bloquée dans la position de transport.

L'élément de blocage assure le blocage de la timonerie dans la position de transport en bloquant la position relative de la bielle par rapport au palier. Avantageusement, la mise en œuvre de l'élément de blocage afin de bloquer ou de libérer la bielle afin de maintenir la timonerie dans la position de transport ne nécessite pas d'outils.

Le palier peut comprendre en outre une ou plusieurs des caractéristiques suivantes prises seules ou en combinaison.

La translation de l'élément mobile se fait selon une direction parallèle au bras de maintien.

Selon une variante, l'élément de blocage est logé au moins partiellement dans le bras de maintien lorsqu'il est dans la position déverrouillée.

L'élément de blocage selon l'invention comprend au moins une paroi s'étendant parallèlement à la direction de déplacement de l'élément de blocage et portant un ergot de retenue, ledit ergot de retenue étant destiné à venir au contact d'une première face de la bielle opposée à une deuxième face disposée en regard du palier.

Selon un mode de réalisation, l'élément de blocage comprend une première et une deuxième parois parallèles, disposées de part et d'autre de l'élément de blocage et s'étendant parallèlement à la direction de déplacement de l'élément de blocage, lesdites première et deuxième parois parallèles étant configurées pour prendre en sandwich la bielle lorsque l'élément de blocage est dans la position de verrouillage.

Selon ce mode de réalisation, la première et la deuxième parois portent chacune un ergot de retenue.

Selon ce mode de réalisation, la première et la deuxième parois sont espacées d'une hauteur supérieure à l'épaisseur de la bielle, et de préférence égale à l'épaisseur de la bielle.

L'élément de blocage présente un pion de manœuvre disposé sur une première face de l'élément de blocage.

Le bras de maintien est fait de matière avec le palier.

Selon une variante, l'élément de blocage présente au moins deux doigts disposés de part et d'autre d'une deuxième face de l'élément de blocage opposée à la première face, lesdits au moins deux doigts servant de butée à l'élément de blocage lors de sa translation le long du bras de maintien.

Selon cette variante, l'extrémité libre du bras de maintien présente au moins une forme de découpe servant de butée aux au moins deux doigts de l'élément de blocage lorsque celui-ci est dans la position de verrouillage.

L'élément de blocage est réalisé en un matériau plastique ou en un matériau métallique.

La présente invention a également pour objet un sous-ensemble d'une timonerie d'un mécanisme d'essuyage comprenant :
- un palier tel que défini précédemment,
- une manivelle articulée sur le palier, ladite manivelle présentant une première extrémité reliée au palier et une deuxième extrémité portant une liaison rotule, et
- une bielle dont une extrémité est reliée par la liaison rotule à la manivelle,
le bras de maintien s'étendant longitudinalement en direction de la bielle et étant agencé de manière à bloquer la bielle dans la position de transport.

Le sous-ensemble peut comprendre en outre une ou plusieurs des caractéristiques suivantes prises seules ou en combinaison.

Selon un mode de réalisation, la bielle comporte un profilé en U.

Selon ce mode de réalisation, la première paroi présente une longueur supérieure à celle de la deuxième paroi de sorte que l'ergot de retenue de la deuxième paroi est au contact de l'intérieur de la surface de la deuxième face du profilé en U de la bielle et que l'ergot de retenue de la première paroi est au contact de l'extérieur de la surface de la première face du profilé en U de la bielle lorsque l'élément de blocage est dans la position de verrouillage.

La présente invention a également pour objet une timonerie d'un mécanisme d'essuyage comprenant un premier et un deuxième sous-ensembles reliés entre eux par une bielle, au moins un des premier et deuxième sous-ensembles est un sous-ensemble tel que décrit ci-dessus, ledit au moins un des premier et deuxième sous-ensembles est agencé pour être bloqué dans la position de transport à l'aide de l'élément de blocage.

Le premier et le deuxième sous-ensembles sont disposés respectivement d'un premier et d'un deuxième côté de la timonerie.

La timonerie comprend en outre un moteur relié à un moins une manivelle, ledit moteur étant configuré pour permettre le déplacement en translation de la bielle.

Le moteur de la timonerie est installé du premier côté de la timonerie.

La présente invention a également pour objet un procédé de blocage d'une bielle d'un sous-ensemble tel que défini ci-dessus, le procédé comprenant au moins une des étapes suivantes :
- rotation de la bielle autour de la liaison rotule afin de positionner celle-ci en position de transport, et
- déplacement de l'élément de blocage de la position déverrouillée vers la position de verrouillage afin de maintenir fixe une extrémité de la bielle par rapport au palier lorsque la timonerie est dans la position de transport.

Le sous-ensemble comporte un palier tel que défini précédemment et le déplacement de l'élément de blocage se fait par poussée de l'élément de blocage en direction de la bielle à l'aide du pion de manœuvre.

Avantageusement, la libération de la bielle se fait par poussée sur le pion de manœuvre en direction opposée à la bielle.

L'élément de blocage peut rester sur le bras de maintien après libération de la bielle.

Le bras de maintien peut rester sur le palier après installation de la timonerie.

Selon un mode de réalisation, la timonerie présente deux paliers disposés de part et d'autre d'une bielle, chaque palier comprenant un bras de maintien tel que défini précédemment, lesdits bras de maintien étant configurés pour bloquer le premier et le deuxième côté de la timonerie dans la position de transport.

Le blocage dans la position de transport de la bielle du premier ou du deuxième côté de la timonerie à l'aide de l'élément de blocage est réversible.

D'autres caractéristiques et avantages de la présente invention apparaîtront plus clairement à la lecture de la description suivante, donnée à titre d'exemple illustratif et non limitatif, et des dessins annexés dans lesquels :
- la figure 1 est une représentation schématique en perspective d'une timonerie bloquée dans une position de transport,
- la figure 2 est une représentation schématique en perspective d'un sous-ensemble de timonerie présentant un bras de maintien selon un mode de réalisation particulier,
- la figure 3 est une représentation schématique en perspective du bras de maintien de la figure 2 comportant un élément de blocage en position déverrouillée,
- la figure 4A est une représentation schématique en perspective d'un sous-ensemble de timonerie au cours d'une étape de positionnement d'une bielle dans une position de transport, et
- la figure 4B est une représentation schématique en perspective du sous-ensemble de timonerie de la figure 4A lorsque la bielle est bloquée en position de transport.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à un premier et à un deuxième côtés de la timonerie, à une première et à une deuxième extrémités de la manivelle, à une première et à une deuxième faces de la bielle, à une première et à une deuxième faces de l'élément de blocage, à une première et à une deuxième parois de l'élément de blocage, et à un premier et à un deuxième sous-ensembles de la timonerie. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la disposition de la timonerie sur le véhicule automobile, son fonctionnement, ou encore son installation, ou encore pour apprécier la forme de l'élément de blocage ou son utilisation afin de maintenir la timonerie dans sa position de transport.

Dans la description suivante, on entend notamment par « position de transport », une position dans laquelle au moins une extrémité de la bielle et une manivelle à laquelle est reliée cette extrémité de la bielle forment un angle minimal. Plus précisément, au moins cette extrémité de la bielle se trouve dans une position rapprochée du palier sur lequel la manivelle est articulée de sorte que la timonerie présente un encombrement minimal lorsqu'elle se trouve dans la position de transport.

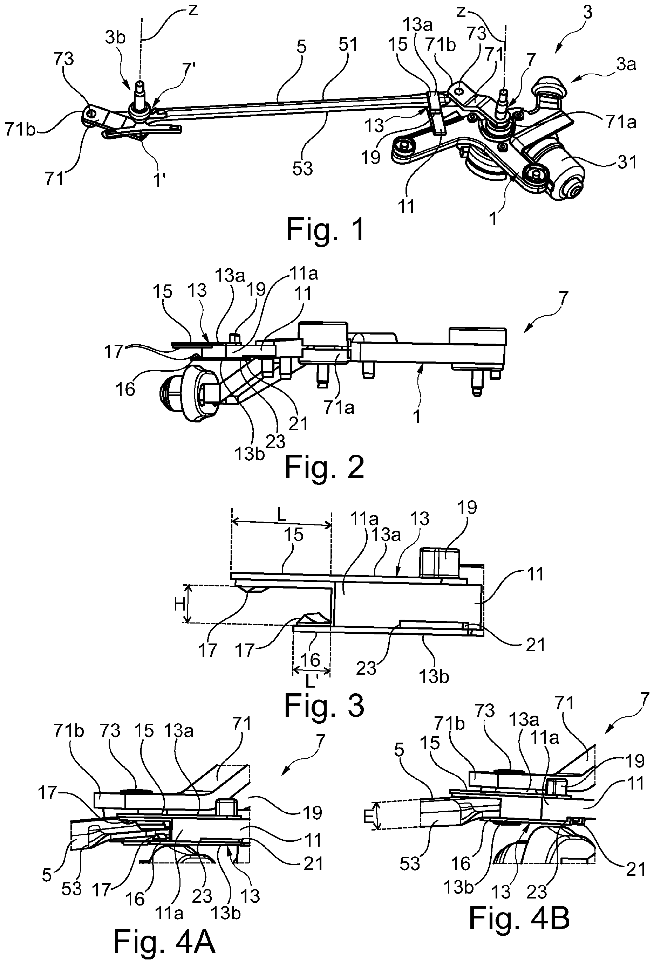

En référence aux figures 1 à 3, il est représenté une timonerie 3 d'un mécanisme d'essuyage d'un véhicule automobile bloquée de manière réversible dans une position de transport. La timonerie 3 comprend un premier sous-ensemble 7' disposé d'un premier côté 3b de la timonerie 3, un deuxième sous-ensemble 7 disposé d'un deuxième côté 3a de la timonerie 3, et un moteur 31 configuré pour permettre le déplacement en translation d'une bielle 5 reliant les premier 7' et deuxième 7 sous-ensembles entre eux et animer selon un mouvement alternatif de pivotement des axes Z destinés à porter des bras balai (non représentés).

Les premier 7' et deuxième 7 sous-ensembles comprennent un palier 1 et une manivelle 71 articulée sur le palier 1. La manivelle 71 présente une première extrémité 71a reliée au palier 1, par une liaison pivot par exemple, et une deuxième extrémité 71b portant une liaison rotule 73 sur laquelle est articulée la bielle 5.

Le palier 1 comprend un bras de maintien 11 s'étendant longitudinalement dans le plan du palier 1 en direction de la bielle 5.

En référence à la figure 2, le bras de maintien 11 présente au niveau d'une extrémité libre 11a un élément de blocage 13 mobile en translation entre une position déverrouillée (ici une position rétractée) et une position de verrouillage (ici une position déployée), de manière à bloquer la bielle 5 dans la position de transport à l'aide d'au moins une paroi 15. Plus précisément, l'élément de blocage 13 est mobile en translation dans le plan du palier 1. En référence à la figure 1, le bras de maintien 11 maintient la position relative d'au moins une extrémité de la bielle 5 fixe par rapport au palier 1.

En référence aux figures 2 et 3, la translation de l'élément mobile 13 entre la position déverrouillée (figure 3) et la position de verrouillage (figure 2) se fait selon une direction parallèle au bras de maintien 11. Selon le mode de réalisation particulier des figures 2 et 3, la position déverrouillée correspond à une position rétractée de l'élément de blocage 13 et la position de verrouillage correspond à une position déployée de l'élément de blocage 13.

L'élément de blocage 13 comprend au moins une paroi 15 s'étendant parallèlement à la direction de déplacement de l'élément de blocage 13. La paroi 15 est disposée sur une première face 13a de l'élément de blocage 13. D'autre part, la paroi 15 porte un ergot de retenue 17 destiné à venir au contact de la première face 51 de la bielle 5 lorsque l'élément de blocage 13 est dans la position de verrouillage. L'élément de blocage 13 présente en outre un pion de manœuvre 19 disposé sur la première face 13a de l'élément de blocage 13. Selon ce mode de réalisation particulier, l'élément de blocage 13 est réalisé en un matériau plastique. Selon un autre mode de réalisation non représenté ici, l'élément de blocage 13 peut être réalisé en un matériau métallique.

Selon le mode de réalisation particulier des figures 2 et 3, l'élément de blocage 13 comprend une première 15 et une deuxième 16 parois parallèles. Les première 15 et deuxième 16 parois sont disposées de part et d'autre de l'élément de blocage 13 et s'étendent parallèlement à la direction de déplacement de l'élément de blocage 13. Plus précisément la première paroi 15 est disposée sur la première face 13a de l'élément de blocage 13 et la deuxième paroi 16 est disposée sur une deuxième paroi 13b de l'élément de blocage 13 opposée à la première paroi 13a. Les première 15 et deuxième 16 parois sont configurées pour prendre en sandwich la bielle 5 lorsque l'élément de blocage 13 est dans la position de verrouillage. Selon ce mode de réalisation particulier, les première 15 et deuxième 16 parois portent chacune un ergot de retenue 17.

En référence à la figure 3, l'élément de blocage 13 est logé au moins partiellement dans le bras de maintien 11 lorsqu'il est dans la position déverrouillée.

Par ailleurs, en référence à la figure 2, le bras de maintien 11 est fait de matière avec le palier 1. Le bras de maintien 11 est constitué de deux parois constituant un rail destiné à guider l'élément de blocage 13 au cours de son déplacement entre la position déverrouillée et la position de verrouillage afin de permettre le blocage réversible d'au moins un des premier 7' et deuxième 7 sous-ensembles dans la position de transport. D'autre part, en référence aux figures 2 et 3, l'extrémité libre 11a du bras de maintien 11 présente au moins une forme de découpe 23 et la deuxième face 13b de l'élément de blocage 13 présente au moins deux doigts 21 disposés en regard de la première face 13a. Selon ce mode de réalisation particulier, les doigts 21 sont disposés en regard du pion de manœuvre 19. Les formes de découpe 23 sont configurées pour servir de butée aux au moins deux doigts 21 de l'élément de blocage 13 lorsque celui-ci est dans la position de verrouillage.

En référence à la figure 3, la première paroi 15 présente une longueur L et la deuxième paroi 16 présente une longueur L'. Plus précisément, la première paroi 15 présente une longueur L supérieure à la longueur L' de la deuxième paroi 16. Selon le mode de réalisation particulier représenté ici, la bielle 5 correspond à un profilé en U et l'ergot de retenue 17 de la deuxième paroi 16 est configuré pour venir au contact de la surface intérieure de la deuxième face 53 du profilé en U de la bielle 5 et l'ergot de retenue 17 de la première paroi 15 est configuré pour venir au contact de la surface extérieure de la première face 51 du profilé en U de la bielle 5 (mieux visible sur les figures 4A et 4B) lorsque l'élément de blocage 13 est dans la position de verrouillage. Une telle disposition des première 15 et deuxième 16 parois permet de bloquer le déplacement de la bielle 5 selon deux directions lorsque celle-ci est dans la position de transport.

En référence à la figure 3, la première 15 et la deuxième 16 parois sont séparées d'une hauteur H supérieure à l'épaisseur E (visible sur la figure 4B) de la bielle 5 de manière à pouvoir la prendre en sandwich. De manière encore préférée, la hauteur H est égale à l'épaisseur E de la bielle 5 de manière à ce que la coopération des ergots 17 portés par les première 15 et deuxième 16 parois avec les parois de la bielle 5 soit renforcée.

Selon le mode de réalisation particulier de la figure 1, le moteur 31 est relié à au moins une manivelle 71. Le moteur 31 est disposé du deuxième côté 3a de la timonerie 3. Le deuxième côté 3a correspond généralement au côté conducteur du véhicule automobile lorsque la timonerie 3 est installée sur celui-ci. Selon une variante, le deuxième côté 3a peut correspondre au côté passager du véhicule automobile lorsque la timonerie 3 est installée sur celui-ci. Selon ce mode de réalisation particulier, seul le deuxième côté 3a de la timonerie 3 présente un bras de maintien 11. Ainsi, seule l'articulation de l'extrémité de la bielle 5 reliée à la liaison rotule 73 portée par le deuxième sous-ensemble de timonerie 7 est bloquée lorsque la timonerie 3 est dans la position de transport.

Selon un autre mode de réalisation non représenté ici, le premier 7' et le deuxième 7 sous-ensembles peuvent présenter sur leur palier 1 respectif un bras de maintien 11. Selon cet autre mode de réalisation, la position relative de chaque extrémité de la bielle 5 disposée du premier 3b et du deuxième 3a côtés de la timonerie 3 est fixe par rapport à la première extrémité 71a de la manivelle 71 portant la liaison rotule 73 sur laquelle l'extrémité de la bielle 5 est articulée de manière à maintenir le premier 3b et le deuxième 3a côtés de la timonerie 3 dans la position de transport. Ainsi, l'articulation de chaque extrémité de la bielle 5 est bloquée.

Selon encore un autre mode de réalisation non représenté ici, seul le premier sous-ensemble 7' présente le bras de maintien 11 de manière à maintenir le premier côté 3b de la timonerie 3 dans la position de transport. Ainsi, seule l'articulation de l'extrémité de la bielle 5 reliée à la liaison rotule 73 portée par le premier sous-ensemble de timonerie 7' est bloquée.

Avantageusement, le blocage de l'articulation d'au moins une extrémité de la bielle 5 sur la liaison rotule 73 portée par le premier 7' ou le deuxième 7 sous-ensemble de timonerie permet de faciliter le transport de cette timonerie 3 en enlevant des degrés de liberté de mouvement de certaines pièces de la timonerie 3 et en bloquant cette timonerie 3 dans une position présentant un encombrement minimal. Par ailleurs, le bbcage de cette articulation permet également de faciliter l'installation de cette timonerie 3 sur le véhicule automobile.

En référence aux figures 4A et 4B, il est représenté un procédé de blocage de la bielle 5 d'un sous-ensemble 7 dans la position de transport.

En référence à la figure 4A, le procédé comprend une étape a de rotation de la bielle 5 autour de la liaison rotule 73 afin de positionner celle-ci dans la position de transport. Lors de cette étape a, l'élément de blocage 13 est dans la position déverrouillée.

En référence à la figure 4B, le procédé comprend également une étape b de déplacement de l'élément de blocage 13 de la position déverrouillée vers la position de verrouillage. Le changement de position de l'élément de blocage 13 est par exemple réalisé par poussée de l'élément de blocage 13 en direction de la bielle 5 à l'aide du pion de manœuvre 19. Le passage en position de verrouillage de l'élément de blocage 13 permet de maintenir fixe une extrémité de la bielle 5 par rapport au palier 1 lorsque la timonerie 3 est dans la position de transport comme représenté en référence à la figure 4B. Selon ce mode de réalisation particulier, la bielle 5 correspond à un profilé en U et l'élément de blocage 13 correspond à celui décrit en référence au mode de réalisation particulier de la figure 3. Ainsi, l'ergot de retenue 17 de la deuxième paroi 16 coopère avec l'intérieur du profilé en U et l'ergot de retenue 17 de la première paroi 15 coopère avec la première face 51 de la bielle 5 lorsque l'élément de blocage 13 est dans la position de verrouillage.

Ainsi, le blocage de la bielle 5 en position de transport est réalisé par glissement de l'élément de blocage 13 le long du bras de maintien 11. Avantageusement, ce glissement ne nécessite pas l'utilisation d'outils.

En référence à la figure 4B, la libération de la bielle 5 se fait par poussée sur le pion de manœuvre 19 en direction opposée à la bielle 5 afin de ramener l'élément de blocage 13 dans la position déverrouillée. Au cours de ce déplacement, les ergots de retenue 17 des première 15 et deuxième 16 parois sont rapprochés du palier 1 et libèrent la bielle 5. Ainsi, la libération de la bielle 5 se fait sans nécessiter l'utilisation d'outils.

Après libération de la bielle 5, l'élément de blocage 13 peut rester sur le bras de maintien 11. Par ailleurs, le bras de maintien 11 peut rester sur le palier 1 après installation de la timonerie 3. La présence du bras de maintien 11 sur la timonerie 3 une fois celle-ci installée sur le véhicule automobile ne gêne pas au fonctionnement du mécanisme d'essuyage car la bielle 5 ne passe pas par la position de transport au cours de son déplacement en translation. D'autre part, la possibilité de laisser le bras de maintien 11 et l'élément de blocage 13 sur le palier 1 offre la possibilité de les réutiliser en cas de démontage ultérieur de la timonerie 3 par exemple. Par ailleurs, cette possibilité de laisser ces éléments sur la timonerie 3 permet également de limiter la quantité de déchets à traiter après l'installation de cette timonerie 3.

Les modes de réalisation particuliers décrits ci-dessus sont des exemples donnés à titre illustratif uniquement et non limitatif. En effet, il est tout à fait possible pour l'homme de l'art d'inverser la disposition des première 15 et deuxième 16 parois sans sortir du cadre de la présente description. Par ailleurs, l'homme de l'art pourra choisir de n'utiliser qu'un seul ergot de retenue 17 disposé au contact de la première paroi 51 de la bielle 5 sans sortir du cadre de la présente description. De plus, l'homme de l'art pourra utiliser un élément de blocage 13 bgé sur la partie extérieure du bras de maintien 11 sans sortir du cadre de la présente invention.

Ainsi, le maintien en place de manière réversible d'une timonerie 3 d'un mécanisme d'essuyage dans une position de transport est possible grâce au bras de maintien 11 présentant un élément de blocage 13 décrit ci-dessus. Avantageusement, l'élément de blocage 13 permet de bloquer et de libérer la timonerie 3 sans nécessiter l'utilisation d'outils. Par ailleurs, l'utilisation d'un tel bras de maintien 11 permet de limiter la quantité de déchets à traiter car ce dernier peut rester sur le palier 1 après l'installation de la timonerie 3 sur le véhicule automobile.

## Revendications

1. Palier (1) d'une timonerie (3) d'un mécanisme d'essuyage, le palier (1) comportant un bras de maintien (11) d'une bielle (5) dans une position de transport, le bras de maintien (11) logeant à son extrémité libre (11a) un élément de blocage (13) de la bielle (5) dans une position de transport, ledit élément de blocage (13) étant mobile en translation entre une position déverrouillée et une position de verrouillage dans laquelle la bielle (5) est bloquée dans la position de transport, **caractérisé en ce que** l'élément de blocage (13) comprend au moins une paroi (15) s'étendant parallèlement à la direction de déplacement de l'élément de blocage (13) et portant un ergot de retenue (17), ledit ergot de retenue (17) étant destiné à venir au contact d'une première face (51) de la bielle (5) opposée à une deuxième face (53) disposée en regard du palier (1).

2. Palier (1) selon la revendication 1, **caractérisé en ce que** l'élément de blocage (13) comprend une première (15) et une deuxième (16) parois parallèles, disposées de part et d'autre de l'élément de blocage (13) et s'étendant parallèlement à la direction de déplacement de l'élément de blocage (13), lesdites première (15) et deuxième (16) parois parallèles étant configurées pour prendre en sandwich la bielle (5) lorsque l'élément de blocage (13) est dans la position de verrouillage.

3. Palier (1) selon la revendication 2, **caractérisé en ce que** la première (15) et la deuxième (16) parois portent chacune un ergot de retenue (17).

4. Palier (1) selon l'une quelconque de revendications précédentes, **caractérisé en ce que** l'élément de blocage (13) présente un pion de manœuvre (19) disposé sur une première face (13a) de l'élément de blocage (13).

5. Palier (1) selon l'une quelconque des revendications précédentes, **caractérisé en ce que** l'élément de blocage (13) présente au moins deux doigts (21) disposés de part et d'autre d'une deuxième face (13b) de l'élément de blocage (13) opposée à la première face (13a), lesdits au moins deux doigts (21) servant de butée à l'élément de blocage (13) lors de sa translation le long du bras de maintien (11).

6. Palier (1) selon la revendication 5, **caractérisé en ce que** l'extrémité libre (11a) du bras de maintien (11) présente au moins une forme de découpe (23) servant de butée aux au moins deux doigts (21) de l'élément de blocage (13) lorsque celui-ci est dans la position de verrouillage.

7. Sous-ensemble (7) d'une timonerie (3) d'un mécanisme d'essuyage comprenant :
• un palier (1) selon l'une quelconque des revendications 1 à 6,
• une manivelle (71) articulée sur le palier (1), ladite manivelle (71) présentant une première extrémité (71a) reliée au palier (1) et une deuxième extrémité (71b) portant une liaison rotule (73), et
• une bielle (5) dont une extrémité est reliée par la liaison rotule (73) à la manivelle (71), le bras de maintien (11) s'étendant longitudinalement en direction de la bielle (5) et étant agencé de manière à bloquer la bielle (5) dans la position de transport.

8. Sous-ensemble (7) selon la revendication 7, **caractérisé en ce que** la bielle (5) comporte un profilé en U.

9. Sous-ensemble (7) selon la revendication 8, **caractérisé en ce que** la première paroi (15) présente une longueur (L) supérieure à celle de la deuxième paroi (16) de sorte que l'ergot de retenue (17) de la deuxième paroi (16) est au contact de l'intérieur de la surface de la deuxième face (53) du profilé en U de la bielle (5) et que l'ergot de retenue (17) de la première paroi (15) est au contact de l'extérieur de la surface de la première face (51) du profilé en U de la bielle (5) lorsque l'élément de blocage (13) est dans la position de verrouillage.

10. Timonerie (3) d'un mécanisme d'essuyage, **caractérisée en ce qu'**elle comprend un premier (7') et un deuxième (7) sous-ensembles reliés entre eux par une bielle (5), **en ce qu'**au moins un des premier (7') et deuxième (7) sous-ensembles est un sous-ensemble (7) selon l'une quelconque des revendications 7 à 9, ledit au moins un des premier (7') et deuxième (7) sous-ensembles est agencé pour être bloqué dans la position de transport à l'aide de l'élément de blocage (13).

11. Procédé de blocage d'une bielle (5) d'un sous-ensemble (7) selon l'une des revendications 7 à 9 comprenant au moins une des étapes suivantes :
• (a) rotation de la bielle (5) autour de la liaison rotule (73) afin de positionner celle-ci en position de transport, et
• (b) déplacement de l'élément de blocage (13) de la position déverrouillée vers la position de verrouillage afin de maintenir fixe une extrémité de la bielle (5) par rapport au palier (1) lorsque la timonerie (3) est dans la position de transport.

12. Procédé de blocage d'une bielle (5) selon la revendication 11, le sous-ensemble (7) comportant un palier (1) selon la revendication 5 et le déplacement de l'élément de blocage (13) se faisant par poussée de l'élément de blocage (13) en direction de la bielle (5) à l'aide du pion de manœuvre (19).

## Patentansprüche

1. Lager (1) eines Gestänges (3) eines Wischmechanismus, wobei das Lager (1) einen Arm zum Halten (11) einer Koppelstange (5) in einer Transportposition aufweist, wobei der Haltearm (11) an seinem freien Ende (11a) ein Element zum Blockieren (13) der Koppelstange (5) in einer Transportposition aufnimmt, wobei dieses Blockierelement (13) zwischen einer entriegelten Position und einer Verriegelungsposition, in welcher die Koppelstange (5) in der Transportposition blockiert ist, translatorisch beweglich ist, **dadurch gekennzeichnet, dass** das Blockierelement (13) wenigstens eine Wand (15) umfasst, die sich parallel zur Bewegungsrichtung des Blockierelements (13) erstreckt und eine Haltenase (17) trägt, wobei die Haltenase (17) dazu bestimmt ist, mit einer ersten Seite (51) der Koppelstange (5) in Kontakt zu kommen, die einer gegenüber dem Lager (1) angeordneten zweiten Seite (53) gegenüberliegt.

2. Lager (1) nach Anspruch 1, **dadurch gekennzeichnet, dass** das Blockierelement (13) eine erste (15) und eine zweite (16) Wand umfasst, die parallel sind, beiderseits des Blockierelements (13) angeordnet sind und sich parallel zur Bewegungsrichtung des Blockierelements (13) erstrecken, wobei die erste (15) und die zweite (16) parallele Wand dafür ausgelegt sind, die Koppelstange (5) sandwichartig zwischen sich aufzunehmen, wenn sich das Blockierelement (13) in der Verriegelungsposition befindet.

3. Lager (1) nach Anspruch 2, **dadurch gekennzeichnet, dass** die erste (15) und die zweite (16) Wand jeweils eine Haltenase (17) tragen.

4. Lager (1) nach einem der vorhergehenden Ansprüche, **dadurch gekennzeichnet, dass** das Blockierelement (13) einen Betätigungszapfen (19) aufweist, der auf einer ersten Seite (13a) des Blockierelements (13) angeordnet ist.

5. Lager (1) nach einem der vorhergehenden Ansprüche, **dadurch gekennzeichnet, dass** das Blockierelement (13) wenigstens zwei Finger (21) aufweist, die beiderseits einer zweiten Seite (13b) des Blockierelements (13) angeordnet sind, die der ersten Seite (13a) gegenüberliegt, wobei die wenigstens zwei Finger (21) als Anschlag für das Blockierelement (13) bei seiner Translation entlang des Haltearmes (11) dienen.

6. Lager (1) nach Anspruch 5, **dadurch gekennzeichnet, dass** das freie Ende (11a) des Haltearmes (11) wenigstens eine Ausschnittsform (23) aufweist, die als Anschlag für die wenigstens zwei Finger (21) des Blockierelements (13) dienen, wenn dieses sich in der Verriegelungsposition befindet.

7. Untereinheit (7) eines Gestänges (3) eines Wischmechanismus, welche umfasst:
• ein Lager (1) nach einem der Ansprüche 1 bis 6,
• eine Kurbel (71), die am Lager (1) angelenkt ist, wobei die Kurbel (71) ein erstes Ende (71a), das mit dem Lager (1) verbunden ist, und ein zweites Ende (71b), das eine Kugelgelenkverbindung (73) trägt, aufweist, und
• eine Koppelstange (5), von der ein Ende über die Kugelgelenkverbindung (73) mit der Kurbel (71) verbunden ist,
wobei sich der Haltearm (11) längs in Richtung der Koppelstange (5) erstreckt und so ausgebildet ist, dass er die Koppelstange (5) in der Transportposition blockiert.

8. Untereinheit (7) nach Anspruch 7, **dadurch gekennzeichnet, dass** die Koppelstange (5) ein U-förmiges Profil aufweist.

9. Untereinheit (7) nach Anspruch 8, **dadurch gekennzeichnet, dass** die erste Wand (15) eine Länge (L) aufweist, die größer als diejenige der zweiten Wand (16) ist, so dass sich die Haltenase (17) der zweiten Wand (16) mit dem Inneren der Oberfläche der zweiten Seite (53) des U-förmigen Profils der Koppelstange (5) in Kontakt befindet und dass sich die Haltenase (17) der ersten Wand (15) mit dem Äußeren der Oberfläche der ersten Seite (51) des U-förmigen Profils der Koppelstange (5) in Kontakt befindet, wenn sich das Blockierelement (13) in der Verriegelungsposition befindet.

10. Gestänge (3) eines Wischmechanismus, **dadurch gekennzeichnet, dass** es eine erste (7') und eine zweite (7) Untereinheit umfasst, die durch eine Koppelstange (5) miteinander verbunden sind, und dadurch, dass wenigstens eine von der ersten (7') und der zweiten (7) Untereinheit eine Untereinheit (7) nach einem der Ansprüche 7 bis 9 ist, wobei die wenigstens eine von der ersten (7') und der zweiten (7) Untereinheit dafür eingerichtet ist, mithilfe des Blockierelements (13) in der Transportposition blockiert zu werden.

11. Verfahren zum Blockieren einer Koppelstange (5) einer Untereinheit (7) nach einem der Ansprüche 7 bis 9, welches wenigstens einen der folgenden Schritte umfasst:
• (a) Drehen der Koppelstange (5) um die Kugelgelenkverbindung (73), um diese in der Transportposition zu positionieren, und
• (b) Bewegen des Blockierelements (13) von der entriegelten Position zur Verriegelungsposition, um ein Ende der Koppelstange (5) in Bezug auf das Lager (1) stationär zu halten, wenn sich das Gestänge (3) in der Transportposition befindet.

12. Verfahren zum Blockieren einer Koppelstange (5) nach Anspruch 11, wobei die Untereinheit (7) ein Lager (1) nach Anspruch 5 aufweist und die Bewegung des Blockierelements (13) durch Drücken des Blockierelements (13) in Richtung der Koppelstange (5) mithilfe des Betätigungszapfens (19) erfolgt.

## Claims

1. Bearing (1) of a linkage (3) of a wiper mechanism, the bearing (1) including an arm (11) for retaining a link (5) in a transport position, the retaining arm (11) housing at its free end (11a) an element (13) for locking the link (5) in a transport position, said locking element (13) being mobile in translation between an unlocked position and a locking position in which the link (5) is locked in the transport position, **characterized in that** the locking element (13) comprises at least one wall (15) extending parallel to the direction of movement of the locking element (13) and carrying a retaining lug (17), said retaining lug (17) being intended to come into contact with a first face (51) of the link (5) opposite a second face (53) disposed facing the bearing (1).

2. Bearing (1) according to claim 1, **characterized in that** the locking element (13) comprises a first wall (15) and a second wall (16) that are parallel, disposed on respective opposite sides of the locking element (13) and extending parallel to the direction of movement of the locking element (13), said parallel first wall (15) and second wall (16) being configured to sandwich the link (5) between them when the locking element (13) is in the locking position.

3. Bearing (1) according to Claim 2, **characterized in that** the first wall (15) and the second wall (16) each carry a retaining lug (17) .

4. Bearing (1) according to any one of the preceding claims, **characterized in that** the locking element (13) includes a manoeuvring peg (19) disposed on a first face (13a) of the locking element (13).

5. Bearing (1) according to any one of the preceding claims, **characterized in that** the locking element (13) includes at least two fingers (21) disposed on respective opposite sides of a second face (13b) of the locking element (13) opposite the first face (13a), said at least two fingers (21) serving as abutments for the locking element (13) during its movement in translation along the retaining arm (11).

6. Bearing (1) according to Claim 5, **characterized in that** the free end (11a) of the retaining arm (11) includes at least one cut-out shape (23) serving as an abutment for the at least two fingers (21) of the locking element (13) when the latter is in the locking position.

7. Subassembly (7) of a linkage (3) of a wiper mechanism, comprising:
• a bearing (1) according to any one of Claims 1 to 6,
• a crank (71) articulated on the bearing (1), said crank (71) having a first end (71a) connected to the bearing (1) and a second end (71b) carrying a ball joint (73), and
• a link (5) one end of which is connected by the ball joint (73) to the crank (71),
the retaining arm (11) extending longitudinally in the direction of the link (5) and being arranged in such a manner as to lock the link (5) in the transport position.

8. Subassembly (7) according to Claim 7, **characterized in that** the link (5) includes a U-section.

9. Subassembly (7) according to Claim 8, **characterized in that** the first wall (15) has a length (L) greater than that of the second wall (16) so that the retaining lug (17) of the second wall (16) is in contact with the interior of the surface of the second face (53) of the U-section of the link (5) and the retaining lug (17) of the first wall (15) is in contact with the exterior of the surface of the first face (51) of the U-section of the link (5) when the locking element (13) is in the locking position.

10. Linkage (3) of a wiper mechanism, **characterized in that** it comprises a first subassembly (7') and a second subassembly (7) connected to one another by a link (5), **in that** the first subassembly (7') and/or the second subassembly (7) is a subassembly (7) according to any one of Claims 7 to 9, said first subassembly (7') and/or second subassembly (7) is adapted to be locked in the transport position with the aid of the locking element (13).

11. Method of locking a link (5) of a subassembly (7) according to any one of Claims 7 to 9 comprising at least one of the following steps:
• (a) rotation of the link (5) about the ball joint (73) in order to position it in the transport position, and
• (b) movement of the locking element (13) from the unlocked position to the locking position in order to hold one end of the link (5) fixed relative to the bearing (1) when the linkage (3) is in the transport position.

12. Method according to Claim 11 of locking a link (5), the subassembly (7) including a bearing (1) according to Claim 5 and the locking element (13) being moved by pushing the locking element (13) in the direction of the link (5) with the aid of the manoeuvring peg (19).
